# EUROPÄISCHE PATENTSCHRIFT

(11) **EP 0 548 381 B1**
(45) Veröffentlichungstag und Bekanntmachung des Hinweises auf die Patenterteilung: **26.11.1997**
(21) Anmeldenummer: 91121712.3
(22) Anmeldetag: 18.12.1991
(51) Int. Cl.: G06F 1/14, G04G 7/00, H04J 3/06

(54) **Verfahren zur Uhrzeitführung in Computernetzen**
Time control method in computer networks
Méthode pour le contrôle du temps dans des réseaux d'ordinateurs

(43) Veröffentlichungstag der Anmeldung: 30.06.1993
(73) Patentinhaber: SIEMENS AKTIENGESELLSCHAFT, 80333 München (DE)
(72) Erfinder: Strohmer, Franz, Dipl.-Ing., W-8520 Erlangen (DE)

(56) Entgegenhaltungen:
- EP-A- 0 327 083
- US-A- 4 584 643
- IEEE TRANSACTIONS ON SOFTWARE ENGINEERING. Bd. 16, Nr. 2, Februar 1990, NEW YORK US Seiten 197 - 211; DIETER HABAN ET AL.: 'A Hybrid Monitor for Behavior and Performance Analysis of Distributed Systems'

## Beschreibung

Die Erfindung betrifft ein Verfahren zur Ermittlung des Zeitzustandes von Computern, welche in einem in Ebenen hierarchisch gegliederten, eine zentrale Hauptuhr aufweisenden Netz zusammengeschaltet sind und Uhrenbausteine aufweisen, wobei Synchronisierungstelegramme in das Netz eingespeist werden, womit eine durchgängige Synchronisierung der in den Computern vorhandenen Uhrenbausteinen auf die Zeit der zentralen Hauptuhr bewirkt wird. Eine derartiges Verfahren ist aus der EP 0 327 983 bekannt.

Aus der Veröffentlichung IEEE Transactions on Software Engineering 16 (1990) February, No.2 ist ferner bekannt "a hybrid monitor for behavior and performance analysis of distributed systems".

In der US-PS 4 584 643 ist für eine fehlertoleranten Uhrzeitführung in verteilten Systemen ein Verfahren beschrieben, bei dem alle im Netz vorhandenen Uhren an der Festlegung der Systemzeit beteiligt werden, indem der Mittelwert aus allen ihren Uhrzeitmeldungen gebildet wird. Dies führt im allgemeinen zu einem recht hohen Meldungsaufkommen und damit zu einer erheblichen Inanspruchnahme der Kommunikationsmittel.

Die Erfindung stellt sich die Aufgabe ein Verfahren anzugeben, mit dem unter mäßiger Inanspruchnahme der Kommunikationsmittel bei systemweiter Uhrzeitführung das Auftreten von unterschiedlichen Zeitbasen im System erkannt und eine fehlerhafte Verknüpfung miteinander nicht konsistenter Uhrzeitmeldungen vermieden wird.

Gelöst wird diese Aufgabe mit den in den kennzeichnenden Merkmalen von Anspruch 1 angegebenen Maßnahmen. Vorteilhafte weitere Ausgestaltungen der Erfindung sind in den Unteransprüchen angegeben.

Die Erfindung samt ihren weiteren Ausgestaltungen soll im folgenden anhand der Figuren näher erläutert werden. Dabei zeigt
- Figur 1: eine beispielhafte Netzkonfiguration,
- Figur 2: die empfangenen Synchronisierungstelegramme und die ausgegebenen Zeitstempel für einige Uhrenbausteine der Konfiguration nach Figur 1, und
- Figur 3: ein Flußdiagramm zur Auswertung der Zeitstempel zweier Uhrenbausteine.

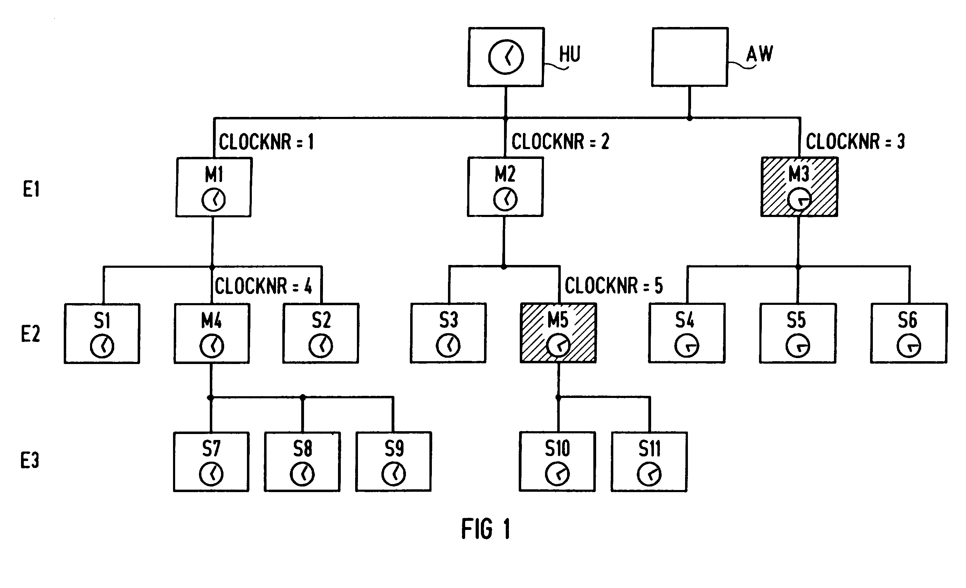

Figur 1 zeigt ein Multimikrocomputersystem mit drei hierarchisch gegliederten Netzwerksebenen E1 bis E3, wovon die Ebene E1 die höchste Hierarchiestufe ist. In den einzelnen Rechnern vorgesehene Uhrenbausteine - angedeutet mit einem Uhrensymbol - werden jeweils von einem Uhrenbaustein der nächsthöheren Ebene synchronisiert. Eine zentrale Hauptuhr HU synchronisiert unmittelbar die Uhrenbausteine der Ebene E1 und bestimmt somit letztlich die Uhrzeit im gesamten System. Jeder Uhrenbaustein, der Uhrenbausteine einer tieferen Ebene synchronisiert, wird als Master bezeichnet und jeder Uhrenbaustein, der zwar synchronisiert wird, jedoch selbst keine Uhrenbausteine einer tieferen Ebene synchronisiert, wird als Slave bezeichnet. Beim dargestellten Beispiel sind also die Master M1 bis M5 mit ihren netzweit gültigen Kennungen (CLOCKNR) und die Slaves S1 bis S11 vorhanden. Es ist weiterhin noch eine zentrale, mit AW bezeichnete Auswerteeinheit vorgesehen, in welcher von den Uhrenbausteinen ausgebbare Zeitstempel registriert, auf zeitliche Konsistenz überprüft und die sie auslösenden Ereignisse zeitlich geordnet werden (event ordering).

Bei den Mastern M3 und M5 ist angenommen, daß sie vorübergehend nicht mit der Hauptuhr HU synchronisiert sind. Ein Grund dafür könnte sein, daß keine Synchronisierungstelegramme sie mehr erreicht haben oder daß ein Neustart ihres Rechners erfolgt ist. In diesem Fall sind die Master-Uhrenbausteine M3 und M5 freilaufend mit der Folge, daß ihre Uhrzeiten nicht mehr konsistent mit denen des übrigen Systems sind, sondern separate Zeitbasen etablieren.

Für die drei Netzwerksebenen sollen folgende Synchronisierungsparameter gelten:

| | E1 | E2 | E3 |
|---|---|---|---|
| Synchronisierungszyklus [sec] | 60 | 10 | 1 |
| Uhrzeitauflösung [msec] | 10 | 10 | 1 |
| Synchronisierungsverzug [msec] | 1,2 | 0,5 | 0,2 |

Synchronisierungszyklus ist der zeitliche Abstand, in dem die Synchronisierungs- bzw. Uhrzeittelegramme aufeinander folgen, die Uhrzeitauflösung ist der extern wahrnehmbare zeitliche Rasterschritt mit dem der Uhrenbaustein seine Zeit hochzählt und der Synchronisierungsverzug ist die maximale Asynchronität, die innerhalb einer Hierarchieebene zwischen zwei Uhrenbausteinen auftreten kann. Der Synchronisierungsverzug ist im wesentlichen durch das Produkt von Synchronisierungszyklus und Quarztoleranz des Uhrenbausteins bestimmt.

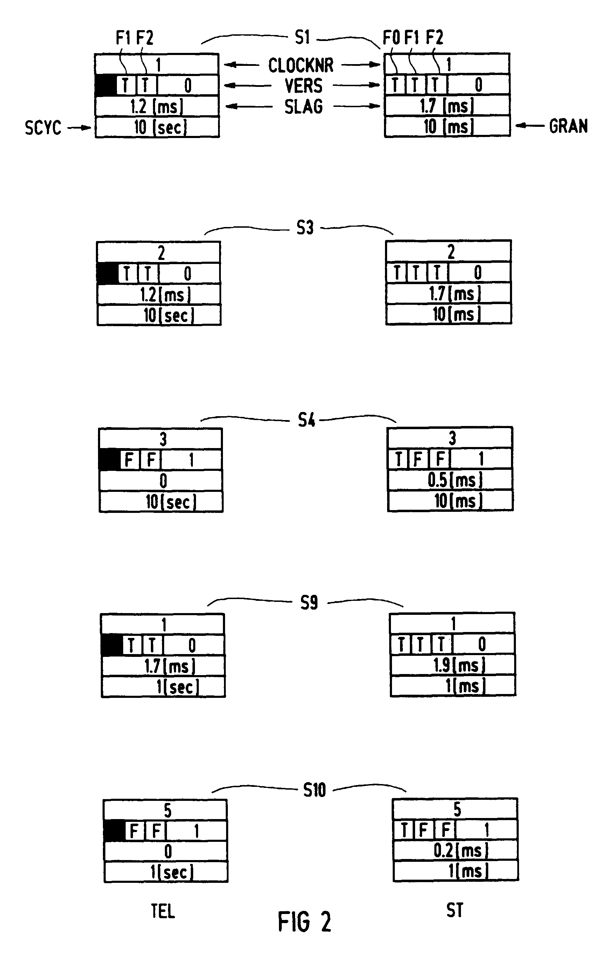

Für das vorstehend geschilderte Szenario gibt bezüglich der Slave-Uhrenbausteine S1, S3, S4, S9 und S10 die Figur 2 den Inhalt der erfindungsgemäß vorgesehenen zusätzlichen Informationsfelder wieder und zwar in der linken, mit TEL bezeichneten Spalte die Informationsfelder der von diesen Uhrenbausteinen empfangenen Synchronisierungsstelegrammen und in der rechten, mit ST bezeichneten Spalte die Informationsfelder der von diesen Bausteinen ausgegebenen Zeitstempeln. Sowohl die Telegramme als auch die ausgegebenen Zeitstempel sind noch um entsprechende Felder für Uhrzeit und Datum ergänzt zu denken, welche jedoch der besseren übersichtlichkeit halber weggelassen wurden.

Das erste, mit CLOCKNR bezeichnete Feld enthält die Information über die Synchronisierungsquelle, d.h., die Kennung des jeweiligen Masters, von dem das empfangene Telegramm orginär stammt. Es wird also immer die Kennung desjenigen Masters eingetragen, der in der hierarchiehöchsten Ebene liegt. Dies wird deutlich beim CLOCKNR-Feld des Slaves S9. Auf diese Weise enthält das mit CLOCKNR gekennzeichnete Feld immer die Kennung der höchstprioren Synchronisierungsquelle.

Das nächste, mit VERS bezeichnete Feld besteht beim Synchronisierungstelegramm aus drei und beim Uhrzeitstempel aus vier Teilfeldern. In dem mit F1 bezeichneten Teilfeld wird mit T (= True) gekennzeichnet, ob der synchronisierende Master-Uhrenbaustein auf die zentrale Hauptuhr HU synchronisiert ist, oder ob er "freilaufend" mit eigener Zeitbasis synchronisiert. In letzterem Fall ist das Teilfeld F1 auf den Wert F (= False) gesetzt. Wenn das Teilfeld F1 auf den Wert T gesetzt ist, bedeutet der Wert T in dem mit F2 bezeichneten Teilfeld, daß von der Hauptuhr HU Sommerzeit ausgegeben ist, für F2 = F, würde die Hauptuhr Winterzeit ausgeben.

Im Falle, daß F1 = False eingetragen ist, kennzeichnet das dritte Teilfeld beim Synchronisierungstelegramm bzw. das vierte Teilfeld beim Uhrzeitstempel die laufende Nummer der aktuellen Freilaufphase des Masters. Ihr Inhalt gibt an, wie oft der diesen Slave synchronisierende Master schon gezwungen war, infolge einer gewollten oder ungewollten Abkopplung von der Hauptuhr beispielsweise durch Ausfall der Synchronisierungstelegramme oder sonstigen Störungen, die Uhrzeit der ihm nachgeordneten Uhrenbausteine autonom zu bestimmen. In diesem Fall erzeugt er selbst die Synchronisierungstelegramme für die ihm untergeordneten Hierarchieebenen und trägt im Feld CLOCKNR seine eigene Kennung ein. Aus dem dritten Teilfeld des VERS-Feldes der Slave-Uhrenbausteine S4 und S10 ist ersichtlich, daß die sie synchronisierenden Master- Uhrenbausteine M3 bzw. M5 zum ersten Mal in eine Freilaufphase gewechselt haben. Es kann also die im vierten Teilfeld des VERS-Feldes enthaltene Zahl als die laufende Nummer einer auf den übergeordneten synchronisierenden Master bezogenen jeweils neu etablierten Zeitbasis interpretiert werden. Das mit F0 bezeichnete Teilfeld ist eine Erweiterung des VERS-Feldes für den Zeitstempel. Jeder Uhrenbaustein setzt dieses Teilfeld auf den Wert T (True), wenn er auf einen übergeordneten Master-Uhrenbaustein synchronisiert ist.

Von besonderer Bedeutung ist das mit SLAG bezeichnete, den Synchronisierungsverzug angebende Feld. Jeder Master-Uhrenbaustein addiert den für seine Hierarchieebene relevanten Synchronisierungsverzug zu dem ihm im Synchronisierungstelegramm mitgeteilten Synchronisierungsverzug. Es akkumulieren sich also in diesem Feld jeweils die Werte des Synchronisierungsverzugs in den einzelnen durchlaufenen Hierarchieebenen. So weist das SLAG-Feld bei dem vom Slave-Uhrenbaustein S1 empfangenen Telegramm den Wert von 1,2 msec. auf, während das SLAG-Feld des vom Slave-Uhrenbaustein S9 empfangenen Telegramms den Wert von 1,7 msec aufweist, entsprechend der Summe aus dem in der Ebene E1 vorhandenen Synchronisierungsverzug (1,2 msec) und dem in der Ebene E2 zu berücksichtigenden Synchronisierungsverzug (0,5 msec). Den Wert des SLAG-Feldes im Zeitstempel berechnet jeder Uhrenbaustein aus der Summe des SLAG-Feldes im von ihm empfangenen Telegramm und dem Wert des für seine Hierarchieebene relevanten Synchronisierungsverzugs. Dies wird aus einem Vergleich der SLAG-Felder vom empfangenen Telegramm und ausgebbaren Zeitstempel für die einzelnen Slaves deutlich.

Die für die Uhrenbausteine bestimmten Telegramme weisen in ihrem vierten, mit SCYC bezeichneten Feld den zeitlichen Abstand auf, in dem die Synchronisierungstelegramme gesendet werden (Synchronisierungs- Zyklus). Dieser Wert ist einerseits wichtig für die vom Uhrenbaustein vorgenommene Berechnung des Synchronisierungsverzugs und dient des weiteren zu Plausibilitätsprüfungen in dem zu synchronisierenden Uhrenbaustein bei Eintreffen der Telegramme sowie zur Überwachung der regelmäßigen Synchronisierung, womit der Ausfall eines Master-Uhrenbausteins erkennbar wird.

Als letzte der zusätzlichen Informationen enthalten die von den Slaves ausgebbaren Uhrzeitstempel noch das mit GRAN bezeichnete Feld, in welches die Uhrzeitauflösung eingetragen ist. Die Summe des in diesem Feld eingetragenen Wertes und der im Feld SLAG eingetragene, akkumulierte Synchronisierungsverzug bestimmt die Ereignisauflösung eines Uhrenbaustein. Unter Ereignisauflösung wird in diesem Zusammenhang der Mindestabstand verstanden, den zwei zu vergleichende Zeitstempel haben müssen, damit die damit gekennzeichneten Ereignisse bei der Auswertung in eine eindeutige zeitliche Reihenfolge im Sinne von vorher/nachher (event ordering) gebracht werden können. Diese so gekennzeichnete Ereignisauflösung ist damit gleichzeitig auch der maximale Differenzfehler der bei Berechnung von Zeitintervallen zwischen zwei Zeitstempeln auftreten kann.

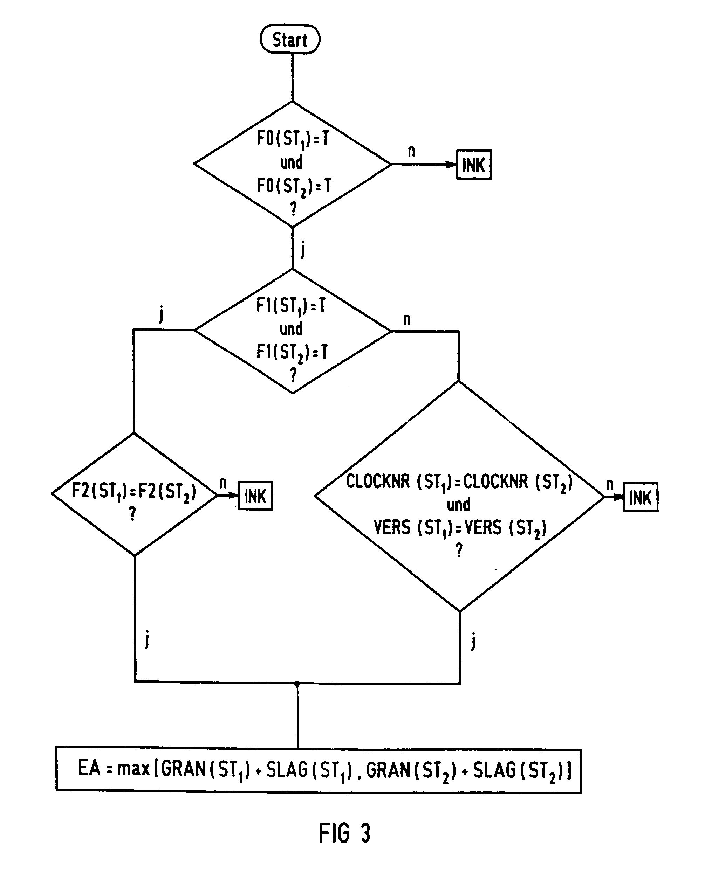

Figur 3 zeigt anhand eines Flußdiagrammes, wie die zusätzlichen Informationen zweier von verschiedenen Uhrenbausteinen gelieferter Zeit stempel ST1 und ST2 zur Konsistenzprüfung und sich daran anschließender Bestimmung der Ereignisauflösung verwendet werden. Zunächst wird geprüft, ob die Teilfelder F0 der beiden Zeitstempel auf den Wert T gesetzt sind. Ist dies nicht der Fall, werden die beiden Zeitstempel unter Ausgabe der Fehlermeldung INK als nicht konsistent abgewiesen, weil aufgrund unterschiedlicher Zeitbasen keine Aussage darüber getroffen werden kann, welcher Zeitstempel das frühere bzw. das spätere Ereignis kennzeichnet. Danach erfolgt die Prüfung, ob die Teilfelder F1 in den beiden Zeitstempeln den Wert T haben. Im bejahenden Fall erfolgt eine Überprüfung, ob die Teilfelder F2 der beiden Zeitstempel ST1 und ST2 denselben Wert haben (Sommerzeit oder Winterzeit). Im bejahenden Fall ist die Konsistenzprüfung erfolgreich verlaufen. Waren bei der Überprüfung der Teilfelder F1 nicht beide auf den Wert T gesetzt, was z.B. der Fall sein könnte, wenn beide Uhrenbausteine auf denselben, freilaufenden Master synchronisiert sind, dann wird geprüft, ob die Felder CLOCKNR und VERS der beiden Zeitstempel übereinstimmen. Wird diese Frage verneint, so werden die beiden Zeitstempel wiederum als inkonsistent abgewiesen, während im bejahenden Fall die Ereignisauflösung EA der beiden zeitkonsistenten Zeitstempel ermittelt wird, die sich aus der jeweils größeren Summe der Werte in den Felder GRAN und SLAG von beiden Zeitstempeln ergibt.

Die Anwendung dieses Flußdiagramms auf das Beispiel der Figur 2 zeigt, daß mit dem erfindungsgemäßen Verfahren zeitkonsistente Zeitstempel und die Ereignisauflösung schlüssig und widerspruchsfrei bestimmt werden können.

## Patentansprüche

1. Verfahren zur Ermittlung des Zeitzustandes von Computern, welche in einem in Ebenen (E1,E2,E3) hierarchisch gegliederten, eine zentrale Hauptuhr (HU) aufweisenden Netz zusammengeschaltet sind und Uhrenbausteine (M1...M5,S1...S11) aufweisen, wobei
a) Synchronisierungstelegramme (TEL) in das Netz eingespeist werden, womit eine durchgängige Synchronisierung der in den Computern vorhandenen Uhrenbausteinen (M1... M5, S1...S11) auf die Zeit der zentralen Hauptuhr (HU) bewirkt wird, und
dadurch gekennzeichnet, daß
b) Zeitstempel (ST;ST1,ST2) vorgesehen sind, welche von den Uhrenbausteinen (S1...S11) der Computer an Endzweigen des Netzes in das Netz eingespeist werden und zumindest Informationsfelder aufweisen betreffend der aktuellen Werte von
b1) Datum und Uhrzeit,
b2) Synchronisierungsquelle (CLOCKNR) und
b3) Synchronisierungsart (VERS), und
c) für die Prüfung der zeitlichen Konsistenz zweier von den Uhrenbausteinen (S1...S11) abgegebener Zeitstempel (ST1,ST2) zumindest deren Informationsfelder betreffend die Synchronisierungsart (VERS) und die Synchronisierungsquelle (CLOCKNR) auf das Vorliegen von Übereinstimmung verglichen werden.

2. Verfahren nach Anspruch 1, wobei
a) die Zeitstempel (ST;ST1,ST2) zusätzliche Informationsfelder aufweisen betreffend der aktuellen Werte von
a1) Synchronisierungsverzug (SLAG) und
a2) Uhrzeitauflösung (GRAN), und
b) nach einer positiv verlaufenen Prüfung der zeitlichen Konsistenz zweier Zeitstempel (ST1,ST2) der minimale zeitliche Abstand (EA) zweier zeitlich noch auflösbaren Ereignisse der Zeitstempel ermittelbar ist, welcher der jeweils größeren Summe ( GRAN(ST1)+SLAG(ST1) bzw. GRAN(ST2)+ SLAG(ST2) ) aus der Uhrzeitauflösung (GRAN) und dem Synchronisierungsverzug (SLAG) von einem der beiden Zeitstempel (ST1 bzw. ST2) entspricht.

3. Verfahren nach einem der vorangegangenen Ansprüche, wobei in den Zeitstempeln (ST1,...) eines Uhrenbausteines (S1,...) die Informationen betreffend Synchronisierungsquelle (CLOCKNR) und Synchronisierungsart (VERS) aus dem jeweils zuletzt von einem im Netz übergeordneten Uhrenbaustein (M1...M5) empfangenen Synchronisierungstelegramm (TEL) übernommen werden.

4. Verfahren nach einem der vorangegangenen Ansprüche, wobei in die Zeitstempel (ST;ST1,ST2) als Synchronisierungsverzug (SLAG) die Summe aus dem Synchronisierungsverzug in der eigenen Netzwerksebene (E1,E2,E3) und dem im Synchronisierungstelegramm (TEL) mitgeteilten Synchronisierungsverzug der jeweils höheren Netzwerksebenen eingetragen wird (Fig.2).

5. Verfahren nach einem der vorangegangenen Ansprüche, wobei die Sychronisierungstelegramme (TEL) ein Informationsfeld (SCYC) betreffend den Synchronisierungszyklus des sendenden Uhrenbausteines (HU,M1...M5) enthalten.

## Claims

1. Method to determine the time state of computers which are connected together in a network, which has a hierarchical structure in levels (E1,E2,E3) and has a central master clock (HU), and which have clock modules (M1...M5,S1...S11), whereby
a) synchronization messages (TEL) are fed into the network, whereby a continual synchronization of the clock modules (M1...M5, S1...S11) present in the computers to the time of the central master clock (HU) is effected, and
characterized in that
b) time stamps (ST;ST1,ST2) are provided which are fed by the clock modules (S1...S11) of the computers at end branches of the network into the network and have at least information fields relating to the current values of
b1) date and time of day,
b2) synchronization source (CLOCKNR) and
b3) synchronization type (VERS), and
c) for the examination of the temporal consistency of two time stamps (ST1, ST2) emitted by the clock modules (S1...S11) at least their information fields relating to the synchronization type (VERS) and the synchronization source (CLOCKNR) are compared for the presence of agreement.

2. Method according to claim 1, whereby
a) the time stamps (ST;ST1,ST2) have additional information fields relating to the current values of
a1) synchronization delay (SLAG) and
a2) time-of-day resolution (GRAN), and
b) after an examination of the temporal consistency of two time stamps (ST1,ST2) which has given a positive result, the minimum time interval (EA) of two events of the time stamps which can still be resolved as a function of time can be determined, which corresponds to the respectively larger sum ( GRAN(ST1)+SLAG(ST1) and GRAN(ST2)+SLAG(ST2) ) of the time-of-day resolution (GRAN) and the synchronization delay (SLAG) of one of the two time stamps (ST1 and ST2).

3. Method according to one of the preceding claims, whereby in the time stamps (ST1,...) of a clock module (S1,...) the information relating to the synchronization source (CLOCKNR) and synchronization type (VERS) is taken from the synchronization message (TEL) received in each case last by a higher-ranking clock module (M1...M5) in the network.

4. Method according to one of the preceding claims, whereby there is entered into the time stamps (ST;ST1,ST2) as synchronization delay (SLAG) the sum of the synchronization delay in the specific network level (E1,E2,E3) and the synchronization delay of the respectively higher network levels communicated in the synchronization message (TEL) (Figure 2).

5. Method according to one of the preceding claims, whereby the synchronization messages (TEL) contain an information field (SCYC) relating to the synchronization cycle of the transmitting clock module (HU,M1...M5).

## Revendications

1. Procédé de détermination de l'état temporel d'ordinateurs, qui sont interconnectés dans un réseau divisé hiérarchiquement en plans (E1, E2, E3) et comportant une horloge (HU) principale centrale et qui comportent des modules d'horloge (M1 à M5, S1 à S11),
a) dans lequel on introduit des télégrammes (TEL) de synchronisation dans le réseau, par lesquels on provoque une synchronisation continue des modules d'horloge (M1 à M5, S1 à S11) présents dans les ordinateurs sur le temps de l'horloge principale centrale (HU), et
caractérisé en ce que
b) on prévoit des repères temporels (ST, ST1, ST2), qui sont introduits par les modules d'horloge (S1 à S11) des ordinateurs à des branches d'extrémité du réseau dans le réseau et qui comportent au moins des champs d'informations concernant les valeurs actuelles de
b1) la date et l'heure,
b2) la source de synchronisation (CLOCKNR) et
b3) le type de synchronisation (VERS), et
c) on compare, pour le contrôle de la cohérence temporelle de deux repères temporels (ST1, ST2) fournis par les modules d'horloge (S1 à S11), au moins le type (VERS) de synchronisation et la source (CLOCKNR) de synchronisation de leurs champs d'informations en ce qui concerne la présence d'une concordance.

2. Procédé suivant la revendication 1, dans lequel
a) les repères temporels (ST ; ST1, ST2) ont des champs d'informations supplémentaires concernant les valeurs actuelles
a1) du retard de synchronisation (SLAG) et
a2) de la résolution de l'heure (GRAN), et
b) lorsque le contrôle de la cohérence temporelle de deux repères temporels (ST1, ST2) s'est déroulé de manière positive, on peut déterminer l'écart temporel minimal (EA) de deux événements, que l'on peut encore résoudre temporellement, des repères temporels, lequel écart correspond à la plus grande somme (GRAN(ST1)+SLAG(ST1) ou GRAN (ST2)+SLAG(ST2)) de la résolution de l'heure (GRAN) et du retard de synchronisation (SLAG) de l'un des deux repères temporels (ST1 ou ST2).

3. Procédé suivant l'une des revendications précédentes, dans lequel on prend en charge dans les repères temporels (ST1, ...) d'un module d'horloge (S1, ...) les informations concernant la source de synchronisation (CLOCKNR) et le type de synchronisation (VERS) à partir du télégramme (TEL) de synchronisation reçu en dernier d'un module d'horloge (M1 à M5) de rang hiérarchique supérieur dans le réseau.

4. Procédé suivant l'une des revendications précédentes, dans lequel on porte dans les repères temporels (ST; ST1, ST2), comme retard de synchronisation (SLAG), la somme du retard de synchronisation dans le propre plan du réseau (E1, E2, E3) et du retard de synchronisation, qui lui est communiqué dans le télégramme (TEL) de synchronisation, des plans du réseau plus élevés (Fig. 2).

5. Procédé suivant l'une des revendications précédentes, dans lequel les télégrammes (TEL) de synchronisation comprennent un champ (SCYC) d'informations concernant le cycle de synchronisation du module (HU, M1 à M5) d'horloge émetteur.
